Europäisches Patentamt

(19) European Patent Office

Office européen des brevets

(11) Veröffentlichungsnummer: **0 087 578**
**B1**

(12) **EUROPÄISCHE PATENTSCHRIFT**

(45) Veröffentlichungstag der Patentschrift:
06.11.85

(21) Anmeldenummer: 83100574.9

(22) Anmeldetag: 22.01.83

(51) Int. Cl.⁴: **C 01 G 49/06**, G 11 B 5/62,
H 01 F 1/11

(54) Nadelförmiges ferrimagnetisches Eisenoxid und Verfahren zu seiner Herstellung.

(30) Priorität: 10.02.82 DE 3204547

(43) Veröffentlichungstag der Anmeldung:
07.09.83 Patentblatt 83/36

(45) Bekanntmachung des Hinweises auf die Patenterteilung:
06.11.85 Patentblatt 85/45

(84) Benannte Vertragsstaaten:
DE FR GB NL     .

(56) Entgegenhaltungen:
EP - A - 0 018 009
DE - A - 2 553 635
DE - A - 2 805 621
US - A - 4 305 752

Patent Abstracts of Japan Band 6, Nr. 22, 9. Februar
1982

(73) Patentinhaber: BASF Aktiengesellschaft,
Carl-Bosch-Strasse 38, D-6700 Ludwigshafen (DE)

(72) Erfinder: Rudolf, Peter, Dr., Wiesenstrasse 1,
D-6708 Neuhofen (DE)
Erfinder: Kovacs, Jenoe, Dr., Kantstrasse 9,
D-6717 Hessheim (DE)
Erfinder: Vaeth, Guenter, Woogstrasse 35,
D-6703 Limburgerhof (DE)
Erfinder: Ohlinger, Manfred, Dr.,
Anselm-Feuerbach-Strasse 13, D-6710 Frankenthal (DE)

## Beschreibung

Die Erfindung betrifft ein modifiziertes nadelförmiges ferrimagnetisches Eisenoxid und ein Verfahren zu seiner Herstellung.

Nadelförmige ferrimagnetische Eisenoxide werden seit langem in grossem Umfang bei der Herstellung magnetischer Aufzeichnungsträger eingesetzt. Zur Herstellung von Gamma-Eisen(III)oxid sind eine Vielzahl von Verfahren bekannt. Unter anderem wird auch die Reduktion von synthetischem Lepidokrokit in Gegenwart zersetzlicher organischer Verbindungen zum Magnetit mit anschliessender Oxidation zum Gamma-Eisen(III)oxid beschrieben (US-A-2 900 236, DE-A-28 05 405 und DE-A-28 05 621). Das Aufbringen von organischen, meist langkettigen Substanzen auf den Lepidokrokit bzw. seines Entwässerungsproduktes soll im Rahmen des Umwandlungsprozesses Versinterungen der Teilchen einschränken und somit zu einem formstabilen und damit gut magnetisch orientierbaren anisotropen Material führen.

Nachteilig an diesen Verfahren ist jedoch, dass die damit erzielbaren Koerzitivfeldstärken auf etwa 26 kA/m beschränkt sind. Um höhere Werte zu erreichen, sind zusätzliche Massnahmen erforderlich, wie z.B. die Entwässerung des Lepidokrokits vor dem Aufbringen des organischen Materials für die Reduktion (DE-A-28 05 405), das dampfförmige Einbringen des organischen Reduktionsmaterials (DE-A-29 04 085) oder auch die Reduktion mit Hilfe eines Gemisches aus Wasserstoff und organischem Material. Auf diese Weise lassen sich zwar die Koerzitivfeldstärken der magnetischen Eisenoxide beachtlich steigern, doch bringen sie eine vergrösserte mittlere Röntgenkristallitgrösse und ein verbreitertes Teilchengrössenspektrum bei der Verwendung zur Herstellung magnetischer Aufzeichnungsträger, insbesondere Nachteile hinsichtlich des Rauschverhaltens und der Aussteuerbarkeit bei hohen Frequenzen.

Der Erfindung lag somit die Aufgabe zugrunde nadelförmige ferrimagnetische Eisenoxide bereitzustellen, welche sich durch eine hohe Koerzitivfeldstärke auszeichnen und eingesetzt zu Herstellung von magnetischen Aufzeichnungsträgern solche mit geringem Rauschen ergeben.

Es wurde nun gefunden, dass nadelförmige ferrimagnetische Eisenoxide den gestellten Anforderungen genügen, wenn sie aus einem Kern aus Gamma-Eisen(III)oxid und einer diesen Kern umhüllenden Schicht aus mit Zinndioxid und Kohlenstoff modifiziertem Gamma-Eisen(III)oxid bestehen. Besonders vorteilhaft sind diese Eisenoxide dann, wenn sie 0,15 bis 1,5 Gew.-% Zinndioxid und 0,1 bis 1 Gew.-% Kohlenstoff, bezogen auf die Gesamtmenge des Materials enthalten.

Zur Herstellung der erfindungsgemässen Eisenoxide wird synthetischer Lepidokrokit oder ein daraus durch Entwässern erhaltenes alpha-Eisen(III)-oxid mit einem Niederschlag aus Zinndioxid sowie mit einer in Gegenwart von Eisenoxid zersetzlichen organischen Verbindung versehen, das so ausgerüstete Material bei 350 bis 500°C zum Magnetit reduziert und anschliessend mittels sauerstoffhaltiger Gase bei 200 bis 450°C zum Gamma-Eisen(III)-oxid oxidiert.

Der für diese Verfahren eingesetzte Lepidokrokit lässt sich unter geeigneten Reaktionsbedingungen aus Eisen(II)salzlösungen mit Alkalien unter gleichzeitiger Oxidation z.B. nach der DE-B-10 61 760 herstellen. Als besonders zweckmässig hat es sich erwiesen, aus einer wässrigen Eisen(II)chloridlösung mittels Alkalien, wie Alkalihydroxid oder Ammoniak, bei Temperaturen zwischen 10 und 36°C und kräftigem Rühren zur Erzeugung feiner Luftblasen, Eisen(III)oxidhydrat-Keime bis zu einer Menge von 25 bis 60 Molprozent des eingesetzten Eisens zu bilden, aus denen dann anschliessend bei einer Temperatur zwischen 20 und 70°C und bei einem durch Zusatz weiterer Alkalimengen eingestellten pH-Wert von 4,0 bis 5,8 unter intensiver Luftverteilung durch Zuwachs das Endprodukt entsteht. Nach beendetem Wachstum soll der Feststoffgehalt an Eisen(III)-oxidhydroxid in der wässrigen Suspension zwischen 10 und 70 g/l, bevorzugt bei 15 bis 65 g/l, liegen. Nach dem Abfiltrieren und Auswaschen des Niederschlags wird das so erhaltene Eisen(III)oxidhydrat bei 60 bis 200°C getrocknet. Auf diese Weise lassen sich stabile Kristallnadeln von Lepidokrokit erhalten, welche nahezu keine dentritischen Verzweigungen aufweisen. Sie haben eine mittlere Teilchenlänge von 0,2 bis 1,5 µm, ein Längen-zu-Dicken-Verhältnis von mindestens 10, üblicherweise 12 bis 40 und eine Teilchenoberfläche, gemessen nach BET zwischen 20 und 70 m$^2$/g. Ein derart charakterisierter Lepidokrokit kann vor der Weiterverarbeitung bei Temperaturen zwischen 300 und 700°C zum alpha-Eisen(III)oxid entwässert werden. Die Temperaturbehandlung ist sowohl in Luft wie auch in einer Inertgasatmosphäre durchführbar. In gleicher Weise eignet sich auch ein Lepidokrokit, welcher bis zu 20 Gew.-% alpha-Eisen(III)oxidhydroxid (Goethit) enthält.

Ein solchermassen hergestellter Lepidokrokit oder ein daraus durch Entwässern gewonnenes alpha-Eisen(III)oxid wird zur Herstellung des erfindungsgemässen Eisenoxids in Wasser aufgeschlämmt. Dieser Suspension wird die Zinn(II)-Verbindung, entweder in Form einer wässrigen sauren Lösung eines Zinn(II)salzes oder als Emulsion einer zinnorganischen Verbindung, zugegeben. Bei der Verwendung der wässrigen Zinn(II)salzlösung wird die Ausfällung und damit Auffällung des Zinndioxids auf das in der Suspension vorhandene Eisenoxidmaterial durch die Zugabe basischer Substanzen unter gleichzeitiger Einleitung von Luft bewirkt. Im Falle des Einsatzes zinnorganischer Verbindungen werden diese unmittelbar auf die Eisenoxidoberfläche absorbiert.

Ebenfalls durch Absorption werden die zur Herstellung des erfindungsgemässen Eisenoxids nötigen organischen Verbindungen auf die Oberfläche des in der Suspension vorhandenen Lepidokrokits oder des in der Suspension befindlichen Entwässerungsproduktes des Lepidokrokits aufgebracht. Die entsprechenden organischen Verbindungen müssen in Gegenwart von Eisenoxiden bei den für das Verfahren vorgeschriebenen Temperaturen, d.h. zwischen 350 und 500°C zersetzlich sein. Hierzu sind bereits eine Reihe unterschiedlicher Verbindungen eingesetzt worden. Im Rahmen der Herstellung der erfindungsgemässen Eisenoxide haben sich jene organischen Verbindungen als vorteilhaft erwiesen, welche bei Raumtemperatur flüssig, bei den angegebenen Temperaturen zersetzlich und schwer flüchtig sind und gut auf der Oberfläche des Lepidokrokits oder seines Entwässerungsprodukts adsorbieren. Insbesondere eignen sich für die Herstellung der erfindungsgemässen Eisenoxide ungesättigte Fettsäuren, Fettsäureester und Olivenöl. Wird für die Zinnmodifizierung des Eisenoxids eine zinnorganische Verbindung eingesetzt, so lässt sich damit die Adsorption der organischen Verbindung kombinieren, so dass keine getrennte Zugabe mehr erforderlich ist.

Die Ausrüstung des Lepidokrokits oder seines Entwässerungsprodukts kann sowohl in der angegebenen Reihenfolge, als auch in einer anderen Reihenfolge, z.B. durch Vorlage der zinnorganischen Verbindung in Wasser und anschliessendes Einbringen des Eisenoxidmaterials, oder in einer anderen Kombination vorgenommen werden. Die zugesetzten Mengen, jeweils bezogen auf den Lepidokrokit oder dessen Entwässerungsprodukts, betragen 0,1 bis 2, vorzugsweise 0,05 bis 0,6 Gew.-% Zinn und 1,5 bis 4, vorzugsweise 2 bis 3 Gew.-% organische Verbindung.

Der so ausgerüstete Lepidokrokit bzw. dessen Entwässerungsprodukt wird nun bei 350 bis 500°C zum Magnetit reduziert. Hierzu wird das Material entweder nur in einem Inertgasstrom, üblicherweise im Stickstoffstrom oder in einem Stickstoff/Wasserstoffstrom 15 bis 120 Minuten lang erhitzt.

Der nach dieser Reduktionsreaktion erhaltene nadelförmige Zinn-/Kohlenstoff-modifizierte Magnetit wird anschliessend durch Überleiten von sauerstoffhaltigen Gasen bei Temperaturen zwischen 200 und 450°C zum entsprechend modifizierten Gamma-Eisen(III)oxid oxidiert.

Dieses erfindungsgemässe Gamma-Eisen(III)oxid besteht somit aus einem Kern aus Gamma-Eisen-(III)oxid und einer diesen Kern umhüllenden Schicht aus mit Zinndioxid und Kohlenstoff modifiziertem Gamma-Eisen(III)oxid, wobei diese äussere Schicht aufgrund des oberflächlichen Aufbringens einer Zinn- und einer organischen Verbindung unter den angegebenen Reduktions- und Oxidationsbedingungen entsteht.

Ein derart modifiziertes Gamma-Eisen(III)oxid zeichnet sich insbesondere durch eine erhöhte Koerzitivfeldstärke aus. Für die Verwendung als magnetisches Material bei der Herstellung von magnetischen Aufzeichnungsträgern ist weiter eine geringe Röntgenkristallitgrösse mit enger Grössenverteilung von Vorteil. Dadurch ist die Schaltfeldstärkenverteilung dieser erfindungsgemässen Materialien sehr eng, wodurch sich rauscharme Aufzeichnungsträger ergeben, die entsprechend der erhöhten Koerzitivfeldstärke eine gute Aussteuerbarkeit bei hohen Frequenzen zeigen.

Zur Herstellung der magnetischen Aufzeichnungsträger werden die erfindungsgemässen Gamma-Eisen(III)oxide in polymeren Bindemitteln dispergiert. Als Bindemittel eignen sich die für diesen Zweck bekannten Verbindungen, wie Polyamide, Polyurethane, Mischungen von Polyisocyanaten und höhermolekularen Polyhydroxylverbindungen, Vinylchlorid-Copolymerisate mit Comonomeren, wie Vinylester von Monocarbonsäuren, Estern von aliphatischen Alkoholen und ungesättigten Carbonsäuren, wie Acrylsäure, Methacrylsäure oder Maleinsäure, oder diesen Carbonsäuren selbst, sowie hydroxylgruppenhaltige Vinylchlorid-Copolymerisate oder Acetate allein oder in Abmischungen. Die Magnetschicht kann zusätzlich noch vernetzt werden. Zur Dispergierung der magnetischen Materialien in der Bindemittellösung werden zweckmässigerweise übliche Dispergiermittel wie beispielsweise Salze von Fettsäuren, Sojalecithin oder sonstige geeignete Stoffe in Mengen von 0,5 bis 6 Gewichtsprozent, bezogen auf die Einwaage des magnetischen Materials, zugegeben. Ausserdem sind Zusätze wie Ester, Carbonsäuren oder Siliconöle in Mengen von 0,5 bis 10 Gew.-% zur Verringerung des Reibungskoeffizienten der Magnetschicht üblich. Als weitere Zusatzstoffe können den Dispersionen auch Füllstoffe, wie Russ, Graphit und/oder nicht magnetisierbare Pulver auf Silikatbasis in bekannter Weise zugesetzt werden. Nach dem Dispergieren erfolgt das Aufbringen der Dispersion mit bekannten Beschichtungseinrichtungen auf übliche Polyethylenterephthalatfolien, wobei ein richtendes Magnetfeld zur Erzielung einer magnetischen Vorzugsrichtung angewendet wird. Nach dem Auftragen und trocknen der Magnetschicht kann diese mit Vorteil an der Oberfläche vergütet, bzw. geglättet und die beschichtete Folie in den zur Herstellung von Magnetogrammträgern üblichen Maschinen in die gewünschte Bandbreite geschnitten werden.

Die Erfindung sei anhand folgender Beispiele und gegenüber dem Stand der Technik durch Vergleichsversuche näher erläutert.

Die magnetischen Pulverwerte werden durch Messung einer auf ein Stopfgewicht von D = 1,2 g/cm$^3$ gebrachten Oxidprobe mit einem konventionellen Schwingmagnetometer bei 160 kA/m Messfeldstärke bestimmt. Die Koerzitivfeldstärke ($H_c$) wird in [kA/m], die spezifische Remanenz ($M_r/\rho$) und die spezifische Magnetisierung ($M_m/\rho$) werden in [nT.m$^3$/g] angegeben. Die spezifische Oberfläche (SN$_2$) der Pulver wird nach BET bestimmt (N$_2$-Adsorption) und in m$^2$/g angegeben. Ebenfalls mit einem Schwingmagnetometer werden die Magnetbandproben bei einer Feldstärke von 160 kA/m untersucht. Angegeben wird die Koerzitivfeldstärke $H_c$, die remanente Magnetisierung R in [mT] und der Richtfaktor RF, d.h. das Verhältnis der remanenten Magnetisierung längs zur Vorzugsrichtung zu der quer dazu. Die Messung der elektroakustischen Banddaten erfolgt nach DIN 45 512, Teil II gegen das Standardbezugsband. Das Rauschen wird auf das Bezugsband T 308 S, gleich OdB, bezogen.

*Beispiel 1*

200 g eines nadelförmigen γ-FeOOH mit einer spezifischen Oberfläche nach BET von 32 m$^2$/g, einer mittleren Teilchenlänge von 0,5 μm und einem Längen-zu-Dickenverhältnis von 16:1 wurden in 1600 g Wasser mit einem Schnellrührer suspendiert. Dazu wurde eine schwach salzsaure $SnCl_2$-Lösung, entsprechend 8 g $SnCl_2$, gegeben und 10 Minuten gerührt. Unter Durchleiten von Luft wurde der pH-Wert der Suspension mittels verdünnter Natronlauge auf 8,0 eingestellt und nach weiteren 10 Minuten Rühren dann ohne weitere Luftzufuhr 5 g Olivenöl zudosiert. Zum Schluss wurde nochmals 10 Minuten gerührt, die Suspension dann filtriert, der Feststoff ausgewaschen und bei 150°C getrocknet. Das getrocknete Produkt wies einen 0,25 Gew.-% Zinn entsprechend Gehalt von Zinndioxid und einen 3,8 Gew.-% C entsprechende Menge von Olivenöl auf.

*Beispiel 2*

Es wurde wie in Beispiel 1 beschrieben verfahren, jedoch wurde eine solche Menge salzsaure $SnCl_2$-Lösung zugegeben, dass das Endprodukt einen $SnO_2$-Gehalt von 0,4 Gew.-% Zinn aufwies.

*Beispiel 3*

Es wurde wie in Beispiel 1 beschrieben verfahren, jedoch wurde eine solche Mengen salzsaure $SnCl_2$-Lösung zugegeben, dass das Endprodukt einen $SnO_2$-Gehalt von 0,6 Gew.-% Zinn aufwies.

*Beispiele 4A bis C*

Je 200 g Lepidokrokit mit den in Beispiel 1 angegebenen Eigenschaften wurden an Luft eine Stunde bei 480°C entwässert. Davon wurden jeweils 180 g des dabei entstandenen alpha-Eisen(III)oxids wie in den Beispielen 1 bis 3 angegeben mit 5 g Olivenöl, entsprechend 3,8 Gew.-% C, und $SnO_2$, entsprechend 0,25 Gew.-% (Beispiel 4A), 0,4 Gew.-% (Beispiel 4B) und 0,6 Gew.-% (Beispiel 4C) Zinn, modifiziert.

*Beispiele 5A bis C*

Es wurde wie in den Beispielen 4A bis C verfahren, jedoch wurde der eingesetzte Lepidokrokit an Luft eine Stunde bei 550°C entwässert. Davon wurden jeweils 180 g des dabei entstandenen alpha-Eisen-(III)oxids wie in den Beispielen 1 bis 3 angegeben mit 5 g Olivenöl, entsprechend 3,8 Gew.-% C, und $SnO_2$, entsprechend 0,25 Gew.-% (Beispiel 5A), 0,4 Gew.-% (Beispiel 5B) und 0,6 Gew.-% (Beispiel 5C) Zinn, modifiziert.

*Beispiel 6*

Ein gemäss Beispiel 1 ausgerüsteter Lepidokrokit wurde in einem Drehkolben im Stickstoffstrom bei 520°C innerhalb von 30 Minuten zum Magnetit reduziert und anschliessend in einem Stickstoff/Luftgemisch bei 300°C zum Gamma-Eisen(III)oxid oxidiert. Die Messergebnisse sind in Tabelle 1 angegeben.

*Beispiel 7*

Ein gemäss Beispiel 1 ausgerüsteter Lepidokrokit wurde in einem Drehkolben im Stickstoff/Wasserstoffstrom (1 : 2) bei 440°C innerhalb von 60 Minuten zum Magnetit reduziert und anschliessend wie im Beispiel 6 zum Gamma-Eisen(III)oxid oxidiert. Die Messergebnisse sind in Tabelle 1 angegeben.

*Beispiel 8*

Ein gemäss Beispiel 2 ausgerüsteter Lepidokrokit wurde wie in Beispiel 7 beschrieben bei 460°C reduziert und anschliessend zum Gamma-Eisen(III)-oxid oxidiert. Die Ergebnisse sind in Tabelle 1 angegeben.

*Beispiel 9*

Ein gemäss Beispiel 3 ausgerüsteter Lepidokrokit wurde wie in Beispiel 7 beschrieben bei 480°C reduziert und anschliessend zum Gamma-Eisen(III)oxid oxidiert. Die Ergebnisse sind in Tabelle 1 angegeben.

*Beispiel 10*

Ein gemäss Beispiel 4A ausgerüstetes alpha-Eisen(III)oxid wurde wie in Beispiel 7 beschrieben bei 450°C reduziert und anschliessend bei 280°C zum Gamma-Eisen(III)oxid oxidiert. Die Ergebnisse sind in Tabelle 1 angegeben.

*Beispiel 11*

Ein gemäss Beispiel 4A ausgerüstetes alpha-Eisen-(III)oxid wurde wie in Beispiel 7 beschrieben bei 440°C in Gamma-Eisen(III)oxid umgewandelt. Die Ergebnisse sind in Tabelle 1 angegeben.

*Beispiel 12*

Ein gemäss Beispiel 4B ausgerüstetes alpha-Eisen-(III)oxid wurde wie in Beispiel 8 beschrieben in Gamma-Eisen(III)oxid umgewandelt. Die Ergebnisse sind in Tabelle 1 angegeben.

*Beispiel 13*

Ein gemäss Beispiel 5A ausgerüstetes alpha-Eisen-(III)oxid wurde in einem Drehkolben bei 500°C im Stickstoffstrom innerhalb von 30 Minuten zum Magnetit reduziert und anschliessend im Stickstoff/Luftstrom bei 280°C zum Gamma-Eisen(III)oxid oxidiert. Die Ergebnisse sind in Tabelle 1 angegeben.

*Beispiel 14*

Ein gemäss Beispiel 5A ausgerüstetes alpha-Eisen-(III)oxid wurde in einem Drehkolben bei 450°C im Stickstoff/Wasserstoffstrom zum Magnetit reduziert und anschliessend im Stickstoff/Luftstrom bei 330°C zum Gamma-Eisen(III)oxid oxidiert. Die Messergebnisse sind in Tabelle 1 angegeben.

*Beispiel 15*

Ein gemäss Beispiel 5B ausgerüstetes alpha-Eisen-(III)oxid wurde wie in Beispiel 14 angegeben in Gamma-Eisen(III)oxid überführt. Die Messergebnisse sind in Tabelle 1 angegeben.

*Vergleichsversuch 1*

Nadelförmiges $\gamma$-FeOOH wie in Beispiel 1 beschrieben, wurde entsprechend wie dort angegeben, jedoch ohne Zugabe von Olivenöl ausgerüstet. Das resultierende Material wurde anschliessend unter den in Beispiel 7 angegebenen Bedingungen in Gamma-Eisen(III)oxid umgewandelt. Die Messergebnisse sind in Tabelle 1 angegeben.

*Vergleichsversuch 2*

Nadelförmiges γ-FeOOH wurde gemäss Beispiel 2, jedoch ohne Zusatz von Olivenöl ausgerüstet und gemäss den in Beispiel 8 beschriebenen Bedindungen in Gamma-Eisen(III)oxid umgewandelt. Die Messergebnisse sind in Tabelle 1 angegeben.

*Vergleichsversuch 3*

Nadelförmiges γ-FeOOH wurde gemäss Beispiel 3, jedoch ohne Zusatz von Olivenöl ausgerüstet, und gemäss den in Beispiel 9 beschriebenen Bedingungen in Gamma-Eisen(III)oxid umgewandelt. Die Messergebnisse sind in Tabelle 1 angegeben.

*Vergleichsversuch 4*

Es wurde wie in Vergleichsversuch 1 vorgegangen, jedoch anstelle der Zugabe der $SnCl_2$-Lösung wurde Olivenöl eingesetzt. Die Messergebnisse sind in Tabelle 1 angegeben.

Tabelle 1

| | | $H_c$ | $M_{r/\rho}$ | $M_{m/\rho}$ | $SN_2$ |
|---|---|---|---|---|---|
| Beispiel | 6 | 25,1 | 35 | 80 | 20,8 |
| » | 7 | 28,4 | 38 | 76 | 21,7 |
| » | 8 | 28,4 | 37 | 75 | 21,8 |
| » | 9 | 28,8 | 39 | 75 | 13,1 |
| » | 10 | 30,8 | 42 | 82 | 18,3 |
| » | 11 | 30,0 | 42 | 77 | 19,8 |
| » | 12 | 30,5 | 42 | 75 | 19,7 |
| » | 13 | 29,0 | 42 | 82 | 18,1 |
| » | 14 | 30,2 | 43 | 82 | 20,8 |
| » | 15 | 30,5 | 41 | 73 | 20,8 |
| Vergl. Vers. | 1 | 25,8 | 44 | 82 | 14,4 |
| » » | 2 | 26,2 | 42 | 81 | 15,0 |
| » » | 3 | 26,2 | 41 | 78 | 15,1 |
| » » | 4 | 25,7 | 40 | 80 | 22,6 |

*Beispiel 16*

In 1600 ml Wasser wurden 2% bzw. 3% Dibutylzinndilaurat, d.h. 2 bzw. 3 g, bezogen auf 100 g Eisenoxid, 5 Minuten emulgiert. Danach wurden 200 g Lepidokrokit bzw. 180 g eines bei 480°C/1 h bzw. 550°C/1 h entwässerten Lepidokrokits zugegeben und weitere 20 Minuten dispergiert. Die Suspension wurde abfiltriert und bei 130°C getrocknet.

Die Analyse des ausgerüsteten Materials ergab, bei 2% Dibutylzinndilaurat 1% organischen Kohlenstoff und bei 3% Dibutylzinndilaurat 1,4% organischen Kohlenstoff.

*Beispiel 17*

200 g eines gemäss Versuch 16 mit 2% Dibutylzinndilaurat ausgerüsteten γ-FeOOH's wurden bei 460°C eine Stunde in einem reduzierendem $N_2/H_2$-Strom zum Magnetit reduziert und hernach bei 330°C im $N_2$/Luftstrom zum γ-$Fe_2O_3$ reoxidiert. Die Versuchsergebnisse sind in Tabelle 2 angegeben.

*Beispiel 18*

200 g eines gemäss Versuch 16 mit 3% Dibutylzinndilaurat ausgerüsteten Lepidokrokits wurden bei 500°C 30 Minuten in einem $N_2$-Strom zum Magnetit reduziert und hernach bei 300°C in einem $N_2$/Luftstrom zum γ-$Fe_2O_3$ reoxidiert. Die Versuchsergebnisse sind in Tabelle 2 angegeben.

*Beispiel 19*

200 g eines gemäss Versuch 16 mit 3% Dibutylzinndilaurat ausgerüsteten γ-FeOOH's wurden in einem reduzierenden $N_2/H_2$-Strom eine Stunde zum Magnetit reduziert und hernach in einem Luft/$N_2$-Strom zum γ-$Fe_2O_3$ reoxidiert. Die Versuchsergebnisse sind in Tabelle 2 angegeben.

*Beispiel 20*

180 g eines gemäss Versuch 16 bei 480°C/1 h entwässerten und mit 2% Dibutylzinndilaurat ausgerüsteten γ-FeOOH's wurden bei 440°C eine Stunde in einem reduzierenden $N_2/H_2$-Strom zum Magnetit reduziert und hernach in einem Luft/$N_2$-Strom bei 330°C zum γ-$Fe_2O_3$ reoxidiert. Die Versuchsergebnisse sind in Tabelle 2 angegeben.

*Beispiel 21*

180 g eines gemäss Versuch 16 bei 480°C/1 h entwässerten und mit 3% Dibutylzinndilaurat ausgerüsteten γ-FeOOH's wurden bei 440°C eine Stunde in einem reduzierenden $N_2/H_3$-Strom zum Magnetit reduziert und hernach in einem Luft/$N_2$-Strom bei 330°C zum γ-$Fe_2O_3$ reoxidiert. Die Versuchsergebnisse sind in Tabelle 2 angegeben.

*Beispiel 22*

180 g eines gemäss Versuch 16 bei 550°C/1 h entwässerten und mit 3% Dibutylzinndilaurat ausge-

rüsteten Lepidokrokits wurden bei 440°C eine Stunde in einem reduzierenden $N_2/H_2$-Strom zum Magnetit reduziert und hernach in einem Luft/$N_2$-Gemisch bei 280°C zum $\gamma$-$Fe_2O_3$ reoxidiert. Die Versuchsergebnisse sind in Tabelle 2 angegeben.

Tabelle 2

|  | $H_c$ | $M_{r/\rho}$ | $M_{m/\rho}$ | $SN_2$ |
|---|---|---|---|---|
| Beispiel 17 | 26,8 | 40 | 76 | 16,3 |
| » 18 | 24,9 | 33 | 79 | 18,1 |
| » 19 | 27,7 | 39 | 75 | 18,4 |
| » 20 | 31,5 | 43 | 76 | 18,8 |
| » 21 | 31,0 | 42 | 75 | 18,7 |
| » 22 | 31,0 | 43 | 82 | 19,9 |

*Beispiel 23*

Mit dem gemäss Beispiel 10 erhaltenen Gamma-Eisen(III)oxid-Material wurde eine Magnetpigmentdispersion und anschliessend ein Magnetband hergestellt. Zur Herstellung der Magnetdispersion wurde eine Topfmühle mit 8000 Teilen Stahlkugeln mit einem Durchmesser von 5 mm gefüllt und anschliessend mit 700 Teilen des Magnetmaterials, 420 Teilen eines Gemisches aus gleichen Teilen Tetrahydrofuran und Dioxan, 8,75 Teilen Lecithin, 8,75 Teilen eines neutralen Polyaminoamidsalzes und 210 Teilen einer 20%igen Lösung eines Copolymerisates aus 80% Vinylchlorid, 10% Dimethylmaleinat und 10% Diethylmaleinat in einem Gemisch aus gleichen Teilen Tetrahydrofuran und Dioxan versehen. Die Mischung wurde 40 Stunden vordispergiert. Anschliessend wurden 1090 Teile einer 10%igen Lösung eines thermoplastischen Polyurethans aus Adipinsäure, 1,4-Butandiol und 4,4'-Diisocyanatodiphenylmethan in einem Gemisch aus gleichen Teilen Tetrahydrofuran und Dioxan, 0,7 Teilen Polydimethylsiloxan zugesetzt. Nach weiterem 5stündigem Dispergieren wurde die erhaltene Magnetdispersion unter Druck durch ein Filter von 5 µm Porenweite filtriert. Mit einem Linealgiesser wurde nach der üblichen Technik eine 6 µm starke Polyethylenterephthalatfolie mit der Magnetdispersion beschichtet und nach Durchlaufen eines Magnetfeldes bei Temperaturen zwischen 60 und 100°C getrocknet. Nach der Trocknung hatte die Magnetschicht eine Dicke (d) von 4,4 µm. Durch Hindurchführen zwischen beheizten Walzen (80°C unter einem Liniendruck von 3 kg/cm) wurde die Magnetschicht verdichtet. Die beschichtete Folie wurde in Bänder von 3,81 mm Breite geschnitten. Die elektroakustische Messung erfolgte nach DIN 45 512, Blatt 2 gegen das Bezugsband T 308 S. Die Messergebnisse enthält Tabelle 3.

*Beispiel 24*

Es wurde wie in Beispiel 23 beschrieben verfahren, jedoch unter Einsatz eines gemäss Beispiel 14 hergestellten Gamma-Eisen(III)oxids. Die Messergebnisse sind in Tabelle 3 angegeben.

Tabelle 3

|  | Bandmagnetwerte | | | | ELA-Daten (*) | | |
|---|---|---|---|---|---|---|---|
|  | $H_c$ | $M_r$ | RF | d (µm) | $E_H$ | $A_H$ | $RG_o$ |
| Beispiel 23 | 29,2 | 137 | 2,2 | 4,4 | ±0 | + 1,9 | + 0,5 |
| Beispiel 24 | 28,9 | 147 | 2,5 | 3,8 | ±0 | + 1,4 | + 0,2 |

(*) $E_H$: Empfindlichkeit bei 10 kHz in [dB]
     $A_H$: Aussteuerbarkeit bei 10 kHz in [dB]
     $RG_o$: Ruhegeräuschspannungsabstand in [dB]

**Patentansprüche**

1. Modifiziertes nadelförmiges ferrimagnetisches Eisenoxid, dadurch gekennzeichnet, dass es aus einem Kern aus Gamma-Eisen(III)oxid und einer diesen Kern umhüllenden Schicht aus mit Zinndioxid und Kohlenstoff modifiziertem Gamma-Eisen(III)oxid besteht.

2. Modifiziertes nadelförmiges ferrimagnetisches Eisenoxid gemäss Anspruch 1, dadurch gekennzeichnet, dass der Anteil an Zinndioxid 0,15 bis 1,5 Gew.-% und der Anteil Kohlenstoff 0,1 bis 1 Gew.-%, jeweils bezogen auf die Gesamtmenge des Materials, beträgt.

3. Verfahren zur Herstellung des modifizierten nadelförmigen ferrimagnetischen Eisenoxids gemäss Anspruch 1 und 2, dadurch gekennzeichnet, dass ein synthetischer Lepidokrokit oder ein daraus durch Entwässern erhaltenes alpha-Eisen(III)oxid mit einem Niederschlag aus Zinndioxid sowie mit einer bei den Umwandlungstemperaturen in Gegenwart von Eisenoxiden zersetzlichen organischen Verbindung versehen, das so ausgerüstete Material bei 350 bis 500°C zum Magnetit reduziert und anschliessend mittels sauerstoffhaltiger Gase bei Temperaturen zwischen 200 und 450°C zu Gamma-Eisen-(III)oxid oxidiert wird.

4. Verfahren gemäss Anspruch 3, dadurch gekennzeichnet, dass der synthetische Lepidokrokit oder das daraus durch Entwässern erhaltene alpha-Eisen(III)oxid mit einer bei Temperaturen zwischen 350 und 500°C zersetztlichen zinnorganischen Verbindung beaufschlagt wird.

## Claims

1. A modified acicular ferrimagnetic iron oxide which consists of a core of gamma-iron(III) oxide and a surrounding shell of gamma-iron(III) oxide modified by tin dioxide and carbon.

2. A modified acicular ferrimagnetic iron oxide as claimed in claim 1, wherein the amount of tin dioxide is from 0.15 t0 1.5% by weight and the amount of carbon is from 0.1 to 1% by weight, the percentages in each case being based on the total amount of the material.

3. A process for the preparation of a modified acicular ferrimagnetic iron oxide as claimed in claims 1 and 2, wherein a synthetic lepidocrocite, or an alpha-iron(III) oxide obtained therefrom by dehydration, is provided with a deposit of tin dioxide and with an organic compound which is decomposable at the conversion temperature in the presence of iron oxide, and the material treated in this manner is reduced, at from 350 to 500°C, to magnetite, which is then oxidized by means of oxygen-containing gases at from 200 to 450°C to give gamma-iron-(III) oxide.

4. A process as claimed in claim 3, wherein the synthetic lepidocrocite, or the alpha-iron(III) oxide obtained therefrom by dehydration, is brought into contact with an organo-tin compound which is decomposable at from 350 to 500°C.

## Revendications

1. Oxyde de fer ferrimagnétique aciculaire, modifié, caractérisé par le fait qu'il est constitué d'un noyau en oxyde de fer (III)-gamma et d'une couche, enveloppant le noyau, d'oxyde de fer (III)-gamma modifié par de l'oxyde stannique et du carbone.

2. Oxyde de fer ferrimagnétique aciculaire, modifié, selon la revendication 1, caractérisé par le fait que la partie oxyde stannique est de 0,15 à 1,5% en poids et la partie carbone est de 0,1 à 1% en poids, chacune rapportée à la quantité totale de matière.

3. Procédé de préparation de l'oxyde de fer ferrimagnétique aciculaire, modifié, selon la revendication 1 et 2, caractérisé par le fait que l'on revêt un lépidocrocite, ou un oxyde de fer (III)-alpha, obtenu en déshydratant celui-ci, d'un dépôt d'oxyde stannique, ainsi que d'un composé organique décomposable à la température de transformation, en présence d'oxydes de fer, on réduit en magnétite, entre 350 et 500°C, la matière ainsi revêtue et on l'oxyde enfin en oxyde de fer (III)-gamma, au moyen de gaz oxygénés, à des températures de 200 à 450°C.

4. Procédé selon la revendication 3, caractérisé par le fait que le lépidocrocite, ou un oxyde de fer (III)-alpha obtenu en déshydratant celui-ci, est soumis à l'attaque d'un composé organique d'étain décomposable à des températures de 350 à 500°C.